# EUROPÄISCHE PATENTSCHRIFT

(11) **EP 0 477 488 B1**
(45) Veröffentlichungstag und Bekanntmachung des Hinweises auf die Patenterteilung: **21.09.1994**
(21) Anmeldenummer: 91111493.2
(22) Anmeldetag: 10.07.1991
(51) Int. Cl.: C08G 18/80, C08G 18/10, C08G 18/28, C08G 18/32, C08G 18/66, C08G 18/79, C08G 18/75, C09D 175/04, C09K 3/10

(54) **Kalthärtende, lösemittelfreie, duroplastische Polyurethan-Polyharnstoff-Massen**
Cold-setting solvent-free duroplastic polyurethane-polyurea masses
Masses de polyuréthane-polyurée duroplastiques durcissant à froid et exempts de solvant

(30) Priorität: 06.09.1990 DE 4028288
(43) Veröffentlichungstag der Anmeldung: 01.04.1992
(73) Patentinhaber: HÜLS AKTIENGESELLSCHAFT, 45764 Marl (DE)
(72) Erfinder: Gras, Rainer, Dr., W-4630 Bochum 5 (DE); Wolf, Elmar, Dr., W-4350 Recklinghausen (DE)

(56) Entgegenhaltungen:
- EP-A- 0 096 210
- FR-A- 2 364 935
- US-A- 4 243 792

## Beschreibung

Die vorliegende Erfindung betrifft kalthärtende, lösemittelfreie, duroplastische Zwei- und Einkomponenten-Polyurethan-Polyharnstoff-Massen (nachfolgend als PUR/PH abgekürzt), bestehend aus primären und/oder sekundären Di- und/oder Polyaminen, wobei gegebenenfalls die primären Aminogruppen in blockierter Form, z. B. als Ketimine vorliegen können, und Polyisocyanaten, deren freie NCO-Gruppen mit speziellen Piperidin-Derivaten blockiert sind, für Beschichtungen, Dichtungs- und Vergußmassen.

Es ist bekannt, daß Polyamine mit Polyisocyanaten so schnell reagieren, daß sie nicht verarbeitbar sind, wenn duroplastische PUR/PH-Massen gebildet werden. Dagegen lassen sich Diamine mit Polyisocyanaten zu thermoplastischen PUR/PH-Massen entweder in Lösung oder in der Schmelze verarbeiten. Bei den zuletzt genannten thermoplastisch-verarbeitbaren PUR/PH-Systemen werden durch Einführung von Harnstoffsegmenten die Eigenschaften der PUR/PH-Elastomeren verbessert.

Es ist also nicht möglich, vernetzte PUR/PH-Systeme, z. B. durch Reaktion eines Diamins mit einem Triisocyanat oder umgekehrt durch Reaktion eines Tri- oder höherfunktionellen Amins mit einem Diisocyanat herzustellen. In der DE-OS 10 86 372 werden erstmals Überzugsmittel bzw. Reaktionslacke vorgestellt, deren Herstellung bei Raumtemperatur durch Umsetzung eines Phenol-blockierten aromatischen Diisocyanats und eines Amidgruppen enthaltenden Amins erfolgt.

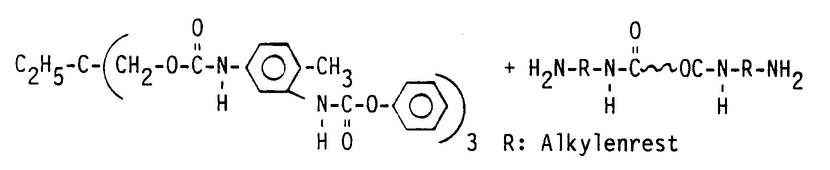

Voraussetzung für dieses Prinzip - Verminderung der NCO-Reaktivität gegenüber NH₂-Gruppen durch Blockierung der NCO-Gruppen - ist, daß das Blockierungsmittel nur so fest gebunden ist, daß es bereits bei Raumtemperatur durch die Aminogruppe verdrängt werden kann, wie dies ja für die Phenol-blockierten aromatischen NCO-Gruppen zutrifft. Am Fatipec-Kongreß 1980 (Fatipec-Kongreßbuch II, 293-306) wurden flexible, vernetzte Zweikomponenten PUR-Elastomersysteme vorgestellt, die nach dem gleichen Prinzip - Verminderung der NCO-Reaktivität durch Blockierung - hergestellt worden sind. Bei diesen vernetzten 2-K-PUR-Elastomeren handelt es sich um ein polymeres Netzwerk, das durch Reaktion eines Nonylphenol-blockierten Isocyanatadduktes aus 1 mol Polypropylenethertriol (MG: ca. 3 000) und 3 mol Toluylendiisocyanat (TDI) mit einem Diamin, z. B. LAROMIN^{(R)} C 260 der Firma BASF (3.3'-Dimethyl-4.4'-diamindicyclohexylmethan) bei Raumtemperatur im NCO:NH₂-Verhältnis von 1:1 erhalten wird.

Beiden, durch eine NCO/NH₂-Reaktion vernetzten PUR-Systemen haftet der Nachteil an, daß sie nicht lichtbeständig sind, da es sich jeweils um aromatische Polyurethane handelt, die ja bekanntermaßen bei Bewitterung zur Verfärbung neigen.

Diesen Nachteil der aromatischen PUR-Systeme durch einfache Substitution des aromatischen Diisocyanats durch ein (cyclo)-aliphatisches zu beseitigen - aliphatische Polyurethane zeigen bekanntermaßen hervorragende Lichtbeständigkeit und Wetterstabilität - ist nicht möglich, da Phenol-blockierte (cyclo)-aliphatisch gebundene NCO-Gruppen bei Raumtemperatur mit Aminogruppen nicht reagieren, d. h. die Deblockierung dieser NCO-Gruppen durch die Aminogruppen findet nicht statt.

Es war die Aufgabe der Erfindung, kalthärtende, lösemittelfreie, duroplatische Zwei- und Einkomponenten-PUR/PH-Elastomere aufzufinden, die auf der Basis von blockierten (cyclo)-aliphatischen Polyisocyanaten und primären und/oder sekundären Di- und/oder Polyaminen, wobei gegebenenfalls die primären Aminogruppen in blockierter Form als Ketimine vorliegen können, bestehen und sich durch Licht- und Wetterstabilität auszeichnen.

Überraschenderweise konnte diese Aufgabe dadurch gelöst werden, daß die NCO-Gruppen des (cyclo)-aliphatischen Polyisocyanats mit speziellen Piperidin-Derivaten blockiert werden und damit die NCO/NH₂-Reaktion beherrschbar wird.

Gegenstand der Erfindung sind kalthärtende, lösemittelfreie, duroplastische Zwei- und Einkomponenten-Polyurethan-Polyharnstoff-Massen, bestehend aus
a) einem (cyclo)-aliphatischen Polyisocyanat, dessen freie NCO-Gruppen mit Piperidin-Derivaten folgender Formeln blockiert sind: 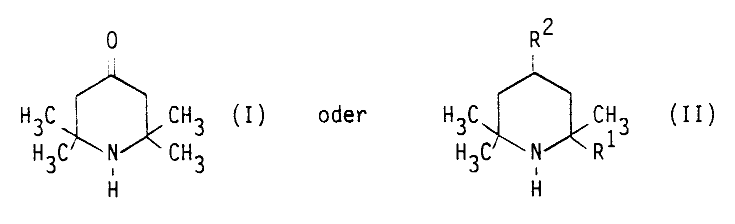 wobei
   - R¹ =: H, CH₃
   - R² =: H, OH, (-O)ₙ-R³, 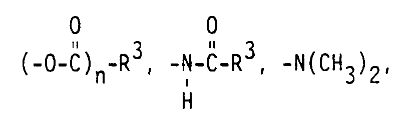 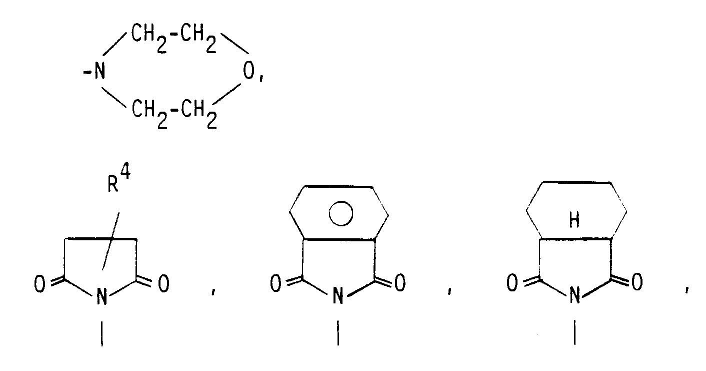
   - n =: 1,2
   - R³ =: C₁-C₁₈-Alkyl, wenn n = 1 und
   - R³ =: C₂-C₁₈-Alkylen, wenn n = 2
   - R⁴ =: H, C₁-C₂₀-Alkyl und
b) einem primären und/oder sekundären Di- und/oder Polyamin, wobei - im Fall der Einkomponenten-Systeme - die primären Aminogruppen in blockierter Form als Ketimine vorliegen und
c) Polyester- und/oder Polyetherpolyolen.

Die Ether- und Esterbindungen nach Formel (II) können auch in bifunktioneller Form eingesetzt werden, wie z. B. Bis-(2.2.6.6-Tetramethyl-4-piperidyl)-sebacat.

Für die erfindungsgemäßen PUR/PH-Massen sind Reaktionsprodukte aus linearen und/oder verzweigten Polyether- und/oder Polyesterpolyolen und (cyclo)-aliphatischen Diisocyanaten geeignet, wobei das OH/NCO-Verhältnis 1:1 bis 1,2, vorzugsweise 1:1 sein kann und die freien NCO-Gruppen der Diisocyanat-Präpolymeren mit Piperidin-Derivaten blockiert sind. Als lineare oder verzweigte Polyetherpolyole kommen die Polyalkylenpolyetherpolyole mit einem mittleren Molekulargewicht von 200 bis 7 000 in Frage, wie sie durch Copolymerisation, Blockpolymerisation oder anionische Polymerisation von Alkylenoxiden, wie insbesondere Ethylen- und/oder Propylenoxid mit di- und polyfunktionellen Alkoholen, wie Ethylenglykol, Propandiol-1,3, Butandiol, Trimethylolpropan oder Aminen, wie Ethylendiamin oder Hexamethylendiamin als Startkomponenten oder kationischer Polymerisation und Copolymerisation cyclischer Ether, wie Tetrahydrofuran, Ethylen- und Propylenoxid mit sauren Katalysatoren erhalten werden.

Ferner eignen sich auch Polyhydroxypolyester. Sie stellen Umsetzungsprodukte von mehrwertigen Alkoholen mit mehrwertigen Carbonsäuren dar. Statt der freien Polycarbonsäuren können auch die entsprechenden Anhydride oder Carbonsäureester von niederen Alkoholen oder deren Gemische verwendet werden. Die Polycarbonsäuren können aliphatischer, cycloaliphatischer, aromatischer und/oder heterocyclischer Natur sein und gegebenenfalls z. B. durch Halogenatome substituiert sein. Beispiele geeigneter Polycarbonsäuren bzw. Polycarbonsäurederivaten sind:
Bernstein-, Adipin-, Sebacin-, Phthal- und Isophthalsäure, Phthalsäure-, Hexahydrophthalsäure-, Tetrahydrophthalsäure- und Tetrachlorphthalsäureanhydrid, dimere Fettsäuren und Terephthalsäuredimethylester.

Als mehrwertige Alkohole kommen z. B. Ethylenglykol, Propylenglykol-(1,2) und -(1,3), Butandiol, Hexandiol-1,6, Octandiol-1,8, Neopentylglykol, 2,2,4(2,4,4)-Trimethylhexandiol-1,6, Cyclohexandimethanol-1,4, 3-Methyl-pentandiol-1,5, Glycerin, Trimethylolpropan, Trimethylolethan, Hexantriol-1,2,6, Diethylenglykol, Triethylenglykol, Tetraethylenglykol, Dipropylenglykol oder Dibutylenglykol in Frage.

Als Rohstoffkomponente zur Polyesterherstellung können auch Lactone, z. B. ε-Caprolacton oder Hydroxycarbonsäuren, z. B. Hydroxycapronsäure, dienen.

Als geeignete (cyclo)-aliphatische Diisocyanate seien genannt: Hexamethylendiisocyanat-1,6 (HDI), 2-Methyl-pentamethylendiisocyanat-1,5, 2,2,4(2,4,4)-Trimethyl-hexamethylendiisocyanat-1,6 (TMDI), Isophorondiisocyanat (IPDI), Methylen-bis-(4-cyclohexylisocyanat), Tetramethyl-xylylendiisocyanat, 1,4-Bis-(isocyanatomethyl)-cyclohexan.

Geeignet im Sinne der Erfindung sind selbstverständlich auch die dimeren und trimeren Formen der Polyisocyanate, wie Uretdione oder Harnstoffe sowie Isocyanurate oder Biurete, die nach bekannten Methoden herstellbar sind.

Selbstverständlich sind die vorgenannten Verbindungen auch im Gemisch mit den monomeren Diisocyanaten im Sinne der Erfindung einsetzbar.

Die endständigen NCO-Gruppen der bi- oder polyfunktionellen Verbindungen werden anschließend mit den Piperidin-Derivaten (I) und (II) bei 50 bis 100 °C so umgesetzt, daß pro NCO-Äquivalent vorzugsweise ein Mol der Piperidin-Verbindung zur Reaktion gebracht wird.

Von den erfindungsgemäß eingesetzten Piperidin-Derivaten werden bevorzugt 2,2,6,6-Tetramethyl-4-dimethylamino-piperidin, 2,2,6,6-Tetramethyl-4-oxo-piperidin (TAA) und das bifunktionelle Piperidin-Derivat Bis-(2,2,6,6-Tetramethyl-4-piperidyl)-sebacat verwendet.

Die Herstellung der NCO-gruppenhaltigen Polyisocyanate sowie auch deren Blockierung kann in Substanz oder in geeigneten, gegenüber NCO-Gruppen inerten, in der PUR-Chemie üblichen Weichmachern und Flammhemmern durchgeführt werden.

Geeignete Weichmacher oder Flammhemmer sind Dicarbonsäureester, z. B. Benzylbutylphthalat, Phosphorsäureester, z. B. Trioctylphosphat, Trikresylphosphat, Chlorphosphorester, z. B. Trichlorethylphosphat, Sulfonsäureester oder Chlorparaffine.

Die erfindungsgemäß einsetzbaren Di- und/oder Polyamine sind an sich bekannte organische Verbindungen mit mindestens zwei primären, vorzugsweise mit primären und/oder sekundären Kohlenstoffatomen verknüpften Aminogruppen und gegebenenfalls weiteren sekundären Aminogruppen.

Es handelt sich dabei vorzugsweise um (cyclo)-aliphatische primäre und/oder sekundäre Di- und/oder Polyamine. Erfindungsgemäß sind auch araliphatische Diamine als aliphatische Diamine zu betrachten. Die beim erfindungsgemäßen Verfahren zu verwendenden Di- und/oder Polyamine weisen eine Molmasse von 60 bis 500, vorzugsweise 100 bis 300 auf.

Beispiele für die verwendbaren primären und/oder sekundären Di- und/oder Polyamine sind: Ethylendiamin, Propylendiamin, Butylendiamin, 2,2,4(2,4,4)-Trimethylhexamethylendiamin-1,6 (TMD), 2-Methyl-pentamethylendiamin-1,5 (DA51), 1,4-Diaminocyclohexan, 1,4-Bis-(aminomethyl)-cyclohexan, Isophorondiamin (IPD), Methylen-bis-(4-cyclohexylamin) (HMDA) und 3,3'-Dimethyl-4,4'-diaminodicyclohexylmethan sowie Diethylentriamin (DETA), Triethylentetramin (TETA), Tetraethylenpentamin (TEPA), Pentaethylenhexamin (PEHA) und Dipropylentriamin.

Erfindungsgemäß können die primären Aminogruppen vorgenannter Di- und/oder Polyamine in ihrer blockierten Form als Ketimine eingesetzt werden, die nach bekannten Methoden durch Kondensation mit Ketonen, z. B. Aceton, Methylethylketon, Methylisobutylketon (MIBK), Diisobutylketon, Cyclohexanon, hergestellt werden.

Erfindungsgemäß lassen sich nunmehr aufgrund der Blockierung der NCO-Gruppen mit den Piperidin-Derivaten in Kombination mit den blockierten Diaminen lagerstabile Einkomponenten-PUR/PH-Massen synthetisieren, ohne daß die bekannten Konkurrenzreaktionen zwischen Isocyanat- und Ketimingruppen möglich sind. Die Aushärtung dieser 1-K-Systeme erfolgt auch bei Raumtemperatur, indem zunächst durch die Luftfeuchtigkeit, also Wasser, das Ketimin hydrolisiert wird und die freigesetzten primären Aminogruppen anschließend die Vernetzung durch Deblockierung der NCO-Gruppen bewirken.

Die blockierten NCO-Gruppen werden mit den Aminogruppen, auch in blockierter Form, im NCO/NH-Verhältnis von 0,8 bis 1,4, vorzugsweise 0,9 bis 1,1 und insbesondere im stöchiometrischen Verhältnis umgesetzt.

Die erfindungsgemäßen Zwei- und Einkomponenten-PUR/PH-Massen eignen sich zur Herstellung von kalthärtenden Beschichtungen, Dichtungs- und Vergußmassen. Die für die jeweiligen Anwendungen erforderlichen Hilfs- und Zusatzstoffe wie Füllstoffe, Pigmente, Katalysatoren, Viskositätsregler, Entschäumer können beigemischt werden, wobei im Falle der 1-K-Systeme auf Wasserfreiheit zu achten ist.

Als Untergrund für die erfindungsgemäßen PUR/PH-Massen kommen beliebige Substrate in Frage, wie Beton, Metall, Holz, Glas, Keramik, Stein sowie Kunststoffe. Die Applikation erfolgt in bekannter Weise durch Rakeln, Gießen, Spritzen, Rollen.

Die nachstehenden Beispiele demonstrieren die erfindunsgemäßen PUR/PH-Massen. Die Prozentangaben beziehen sich auf Gewichtsprozente; die Angaben in Teilen auf Gewichtsteile.

### Experimenteller Teil

### Herstellung der erfindungsgemäßen Polyurethan-Polyharnstoffmassen

### A Zweikomponenten-Systeme

### Beispiel 1

2 000 Gew.-T. eines linearen Polyoxypropylenglkols mit einer OH-Zahl von 56 mg KOH/g wurden mit 444 Gew.-T. IPDI bei 80 °C so lange erhitzt, bis der NCO-Gehalt des Reaktionsgemisches bei ca. 3,4 Gew.-% lag. Danach wurden dem Reaktionsgemisch unter intensiver Rührung 282 Gew.-T. 2,2,4,6-Tetramethylpiperidin portionsweise zugegeben und so lange bei 80 °C weiter erhitzt, bis der NCO-Gehalt des Gemisches auf ca. 0,2 Gew.-% gefallen war. Die Viskosität des Reaktionsproduktes betrug bei 25 °C 54 000 mPa·s.

Das blockierte IPDI-Präpolymer wird mit der äquivalenten Menge Polyamin und gegebenenfalls mit 0,05-0,1 Gew.-% Entschäumer homogenisiert und anschließend, falls erforderlich, weitgehend bis zur Blasenfreiheit entgast. Die Gießmasse wird in Formen gegossen und bei Raumtemperatur ausgehärtet.

| Beispiel | | 1,1 | 1,2 | 1,3 | 1,4 |
|---|---|---|---|---|---|
| Polyamin | | DETA | TETA | TEPA | PEHA |
| TZ in h | | 2-3 | 2-3 | 2-3 | 2,5-3 |
| Shore-A nach | 1d | 8 | 15 | 30 | 39 |
| | 3d | 12 | 19 | 36 | 44 |
| | 7d | 16 | 25 | 39 | 47 |

Die Abkürzungen in den Tabellen bedeuten:
- TZ: Topfzeit
- h: Stunden
- d: Tage
Shore-A Härteprüfung gemäß DIN 53 505
- DISFLAMOLL^{(R)} TKP: = Trikresylphosphat
- MESAMOLL^{(R)}: = Alkylsulfonsäureester des Phenols
- DISFLAMOLL^{(R)} TOF: = Trioctylphosphat

### Beispiel 2

2 000 Gew.-T. eines linearen Polyoxypropylenglykols mit einer OH-Zahl von 56 mg KOH/g wurden mit 444 Gew.-T. IPDI bei 80 °C so lange erhitzt, bis der NCO-Gehalt 3,4-Gew.-% erreicht hatte. Danach wurden 310 Gew.-T. TAA unter intensiver Rührung portionsweise zugegeben und ca. 4 Stunden weiter erhitzt. Das Reaktionsprodukt hatte eine Viskosität bei 25 °C von 8 100 mPa·s und einen freien NCO-Gehalt von ca. 0,2 Gew.-%.
Gemäß Beispiel 1 wurde das blockierte IPDI-Präpolymer mit der äuqivalenten Menge Polyamin umgesetzt und bei Raumtemperatur gehärtet.

| Beispiel | | 2,1 | 2,2 | 2,3 | 2,4 | 2,5 |
|---|---|---|---|---|---|---|
| Polyamin | | DETA | TETA | TEPA | PEHA | PEHA/IPD 1:1 |
| TZ in h | | 1,5-2,5 | 1,5-2,5 | 1-2 | 1,5-2,5 | 2-3 |
| Shore-A nach | 1d | 10 | 14 | 32 | 37 | 42 |
| | 3d | 14 | 19 | 39 | 44 | 47 |
| | 7d | 19 | 27 | 41 | 49 | 55 |

### Beispiel 3

3 000 Gew.-T. eines verzweigten Polyoxypropylenglykols mit einer OH-Zahl von 56 mg KOH/g wurde gemäß Beispiel 1 mit 666 Gew.-T. IPDI zur Reaktion gebracht. Anschließend wurden die NCO-Gruppen mit 423 Gew.-T. 2,2,4,6-Tetramethylpiperidin blockiert. Das Reaktionsprodukt hatte bei 25 °C eine Viskosität von 35 000 mPa·s. Gemäß Beispiel 1 wurde das blockierte Präpolymer im äquivalenten Verhältnis mit Polyaminen umgesetzt und bei Raumtemperatur gehärtet.

| Beispiel | | 3,1 | 3,2 | 3,3 | 3,4 | 3,5 | 3,6 | 3,7 |
|---|---|---|---|---|---|---|---|---|
| Polyamin | | DETA | TETA | TEPA | PEHA | IPD | HMDA | TETA/HMDA 1:1 |
| TZ in h | | 1,5-2,5 | 1,5-2 | 1,5-2 | 1,5-2 | 0,5-1 | 0,5-1 | 1-1,5 |
| Shore-A nach | 1d | 10 | 19 | 32 | 36 | 28 | 30 | 34 |
| | 3d | 12 | 24 | 35 | 40 | 34 | 38 | 43 |
| | 7d | 14 | 28 | 37 | 45 | 39 | 43 | 46 |

### Beispiel 4

3 666 Gew.-T. des NCO-Präpolymeren aus Beispiel 3 wurden bei 80 °C mit 465 Gew.-T. TAA entsprechend Beispiel 2 umgesetzt. Die Viskosität des Reaktionsproduktes betrug bei 25 °C 9 600 mPa·s, der freie NCO-Gehalt lag bei 0,2 Gew.-%.
Gemäß Beispiel 1 wurde das blockierte Präpolymer im äquivalenten Verhältnis mit Polyaminen umgesetzt und bei Raumtemperatur gehärtet.

| Beispiel | | 4,1 | 4,2 | 4,3 | 4,4 | 4,5 | 4,6 |
|---|---|---|---|---|---|---|---|
| Polyamin | | DETA | TETA | TEPA | PEHA | IPD | HMDA |
| TZ in h | | 1-1,5 | 1-1,5 | 1-1,2 | 1 | 0,5-0,75 | 0,5-1 |
| Shore-A nach | 1d | 11 | 18 | 30 | 38 | 30 | 31 |
| | 3d | 14 | 25 | 37 | 42 | 34 | 40 |
| | 7d | 17 | 27 | 39 | 47 | 38 | 45 |

### Beispiel 5

547 Gew.-T. eines NCO-Präpolymeren aus 222 Gew.-T. IPDI und 325 Gew.-T. eines Polytetrahydrofurandiols (MG 650) wurden in 702 Gew.-T. DISFLAMOLL^{(R)} TKP mit 155 Gew.-T. TAA entsprechend Beispiel 1 umgesetzt. Das Reaktionsprodukt hatte bei 25 °C eine Viskosität von 2 800 mPa·s und einen freien NCO-Gehalt von 0,2 Gew.-%. Gemäß Beispiel 1 wurde das blockierte IPDI-Präpolymer mit der äquivalenten Menge Polyamin umgesetzt und bei RT ausgehärtet.

| Beispiel | | 5,1 | 5,2 | 5,3 | 5,4 |
|---|---|---|---|---|---|
| Polyamin | | DETA | TETA | TEPA | PEHA |
| TZ in h | | 0,6 | 0,5 | 0,3 | 0,2 |
| Shore-A nach | 1d | 12 | 25 | 30 | 34 |
| | 3d | 20 | 30 | 40 | 42 |
| | 7d | 25 | 30 | 38 | 46 |

### Beispiel 6

722 Gew.-T. eines NCO-Präpolymeren aus 222 Gew.-T. IPDI und 500 Gew.-T. eines Polytetrahydrofurandiols (MG 1 000) wurden in 877 Gew.-T. MESAMOLL^{(R)} mit 155 Gew.-T. TAA entsprechend Beispiel 1 umgesetzt. Das Reaktionsprodukt hatte bei 25 °C eine Viskosität von 2 400 mPa·s und einen freien NCO-Gehalt von 0,2 Gew.-%. Gemäß Beispiel 1 wurde das blockierte IPDI-Präpolymer mit der äquivalenten Menge Polyamin umgesetzt und bei RT ausgehärtet.

| Beispiel | | 6,1 | 6,2 | 6,3 | 6,4 | 6,5 |
|---|---|---|---|---|---|---|
| Polyamin | | DETA | TETA | TEPA | PEHA | TETA/HMDA 50:50 |
| TZ in h | | 0,5 | 0,5 | 0,3 | 0,2 | 0,4 |
| Shore-A nach | 1d | 10 | 26 | 31 | 33 | 25 |
| | 3d | 12 | 30 | 35 | 36 | 28 |
| | 7d | 14 | 26 | 37 | 40 | 34 |

### Beispiel 7

556 Gew.-T. des trimeren Hexamethylendiisocyanats (Isocyanurat des Hexamethylendiisocyanats) wurden in 1 000 Gew.-T. DISFLAMOLL^{(R)} TKP mit 444 Gew.-T. TAA entsprechend Beispiel 1 umgesetzt. Das Reaktionsprodukt hatte eine Viskosität bei 25 °C von 14 600 mPa·s und einen freien NCO-Gehalt von 0,2 Gew.-%.
Gemäß Beisiel 1 wurde das blockierte HDI-Isocyanurat mit der äquivalenten Menge Polyamin umgesetzt und bei RT ausgehärtet.

| Beispiel | | 7,1 | 7,2 | 7,3 | 7,4 | 7,5 | 7,6 |
|---|---|---|---|---|---|---|---|
| Polyamin | | TMD | IPD | HMDA | LAROMIN^{R} C 260 | DETA | TMD/IPD 50:50 |
| TZ in h | | 0,25 | 1 | 1,25 | 1,3 | 0,5 | 0,5 |
| Shore-A nach | 1d | 36 | 77 | 69 | 65 | 60 | 48 |
| | 3d | 35 | 83 | 72 | 67 | 64 | 52 |
| | 7d | 34 | 86 | 75 | 71 | 66 | 56 |

### Beispiel 8

205,1 Gew.-T. des trimeren Hexamethylendiisocyanats (Isocyanurat des Hexamethylendiisocyanats) wurden in 205,1 Gew.-T. DISFLAMOLL^{(R)} TKP mit 157 Gew.-T. 2,2,4,6-Tetramethylpiperidin entsprechend Beispiel 1 umgesetzt. Das Reaktionsprodukt hatte eine Viskosität bei 25 °C von 25 500 mPa·s und einen freien NCO-Gehalt von 0,3 Gew.-%. Gemäß Beispiel 1 wurde das blockierte HDI-Isocyanurat mit der äquivalenten Menge Polyamin umgesetzt und bei RT ausgehärtet.

| Beispiel | | 8,1 | 8,2 | 8,3 | 8,4 | 8,5 | 8,6 |
|---|---|---|---|---|---|---|---|
| Polyamin | | IPD | HMDA | LAROMIN^{R} C 260 | DETA | TETA | PEHA |
| TZ in h | | 1-1,5 | 1-1,5 | 1-1,5 | 1 | 1 | 0,75-1 |
| Shore-A nach | 1d | 76 | 78 | 67 | 59 | 70 | 70 |
| | 3d | 80 | 81 | 69 | 64 | 73 | 78 |
| | 7d | 83 | 84 | 74 | 67 | 78 | 85 |

### Beispiel 9

444 Gew.-T. IPDI wurden mit 1 000 Gew.-T. eines Polytetrahydrofurandiols (MG 1 000) in 1 839 Gew.-T. MESAMOLL^{(R)} so lange bei 80 °C erhitzt, bis der NCO-Gehalt der Lösung 2,6 Gew.-% erreicht hatte. Anschließend wurde das Reaktionsgemisch mit 155 Gew.-T. TAA und 240 Gew.-T. Sebacinsäureester des 4-Hydroxy-2,2,6,6-Tetramethylpiperidins entsprechend Beispiel 1 umgesetzt. Das Reaktionsprodukt hatte bei 25 °C eine Viskosität von 5 300 mPa·s und einen freien NCO-Gehalt von 0,2 Gew.-%.
Gemäß Beispiel 1 wurde das blockierte IPDI-Präpolymer mit der äquivalenten Menge Polyamin umgesetzt und bei RT ausgehärtet.

| Beispiel | | 9,1 | 9,2 | 9,3 | 9,4 |
|---|---|---|---|---|---|
| Polyamin | | DETA | TETA | TEPA | PEHA |
| TZ in h | | 0,25 | 0,25 | 0,3 | 0,2 |
| Shore-A nach | 1d | 5 | 19 | 24 | 27 |
| | 3d | 7 | 22 | 27 | 32 |
| | 7d | 10 | 24 | 29 | 38 |

### Beispiel 10

444 Gew.-T. IPDI wurden mit 1 000 Gew.-T. eines OH-gruppenhaltigen Polyesters, bestehend aus Adipinsäure, Hexandiol-1,6 und NPG mit einem Molekulargewicht von 1 000 in 1 226 Gew.-T. MESAMOLL^{(R)} so lange bei 80 °C erhitzt, bis der NCO-Gehalt der Lösung 2,6 % erreicht hatte. Anschließend wurde das Reaktionsgemisch mit 155 Gew.-T. TAA und 240 Gew.-T. Sebacinsäureester des 4-Hydroxy-2,2,6,6-Tetramethylpiperidins entsprechend Beispiel 1 umgesetzt. Das Reaktionsprodukt hatte eine Viskosität bei 25 °C von 14 300 mPa·s und einen freien NCO-Gehalt von 0,2 Gew.-%.
Gemäß Beispiel 1 wurde das blockierte IPDI-Präpolymer mit der äquivalenten Menge Polyamin umgesetzt und bei RT ausgehärtet.

| Beispiel | | 10,1 | 10,2 | 10,3 | 10,4 |
|---|---|---|---|---|---|
| Polyamin | | DETA | TETA | DETA/IPD 50:50 | DETA/HMDA 50:50 |
| TZ in h | | 0,15 | 0,1 | 0,2 | 0,2 |
| Shore-A nach | 1d | 16 | 24 | 18 | 21 |
| | 3d | 18 | 26 | 21 | 25 |
| | 7d | 21 | 29 | 24 | 30 |

### Beispiel 11

547 Gew.-T. eines NCO-Präpolymeren aus 222 Gew.-T. IPDI und 325 Gew.-T. eines Polytetrahydrofurandiols (MG 650) wurden in 787 Gew.-T. DISFLAMOLL^{(R)} TOF mit 240 Gew.-T. Sebacinsäureester des 4-Hydroxy-2,2,6,6-Tetramethylpiperidins entsprechend Beispiel 1 umgesetzt. Das Reaktionsprodukt hatte eine Viskosität bei 25 °C von 5 600 mPa·s und einen freien NCO-Gehalt von 0,2 Gew.-%.
Gemäß Beispiel 1 wurde das blockierte IPDI-Präpolymer mit der äquivalenten Menge Polyamin umgesetzt und bei RT ausgehärtet.

| Beispiel | | 11,1 | 11,2 | 11,3 | 11,4 |
|---|---|---|---|---|---|
| Polyamin | | DETA | TETA | DETA/IPD 50:50 | DETA/LAROMIN^{R} C 260 50:50 |
| TZ in h | | 0,75 | 0,5 | 0,5 | 0,25 |
| Shore-A nach | 1d | 35 | 38 | 37 | 41 |
| | 3d | 40 | 42 | 41 | 44 |
| | 7d | 41 | 44 | 43 | 49 |

### Beispiel 12

1 222 Gew.-T. des Präpolymeren aus Beispiel 2 wurden in 365,5 Gew.-T. DISFLAMOLL^{(R)} TOF mit 240 Gew.-T. Sebacinsäureester des 4-Hydroxy-2,2,6,6-Tetramethylpiperidins entsprechend Beispiel 1 umgesetzt. Das Reaktionsprodukt hatte eine Viskosität bei 25 °C von 7 400 mPa·s und einen freien NCO-Gehalt von 0,2 Gew.-%. Gemäß Beispiel 1 wurde das blockierte IPDI-Präpolymer mit der äquivalenten Menge Polyamin umgesetzt und bei RT ausgehärtet.

| Beispiel | | 12,1 | 12,2 | 12,3 | 12,4 | 12,5 |
|---|---|---|---|---|---|---|
| Polyamin | | DETA | TETA | TEPA | PEHA/HMDA 50:50 | TETA/IPD 50:50 |
| TZ in h | | 2 | 1 | 0,5 | 2 | 2 |
| Shore-A nach | 1d | 19 | 23 | 30 | 19 | 17 |
| | 3d | 21 | 26 | 34 | 21 | 24 |
| | 7d | 24 | 28 | 34 | 23 | 24 |

### B Einkomponenten-Systeme

Die eingesetzten Bis-Ketime wurden nach bekannten Methoden aus Polyamin und Keton unter Verwendung eines Schleppmittels und p-Toluolsulfonsäure am Wasserabscheider synthetisiert. Nach Erhalt der berechneten Wassermenge wurde das Schleppmittel abdestilliert und das entsprechende Bis-Ketimin im Vakuum destilliert.

### Beispiel 1

a) 1 332 Gew.-T. IPDI wurden mit 134 Gew.-T. Trimethylolpropan in 1 907 Gew.-T. DISFLAMOLL^{(R)} TKP so lange bei 80 °C erhitzt, bis der NCO-Gehalt der Lösung 11,2 % erreicht hatte. Anschließend wurde das Reaktionsgemisch mit 1 395 Gew.-T. TAA entsprechend Beispiel 1 umgesetzt. Das Reaktionsprodukt hatte eine Viskosität bei 25 °C von 21 500 mPa·s und einen freien NCO-Gehalt von 0,3 Gew.-%.
b) 50 Gew.-% des blockierten Präpolymeren gemäß Beispiel B 1a und 50 Gew.-% des blockierten Präpolymeren gemäß Beispiel A 2 wurden mit der äquivalenten Menge MIBK-IPD-bis-Ketimin homogenisiert und auf Betonplatten appliziert. Die Härtung erfolgte bei RT. Nach 24 h Härtezeit war die Oberfläche klebfrei und nach 7d war die Beschichtung ausgehärtet.

### Beispiel 2

50 Gew.-% des blockierten Präpolymeren gemäß Beispiel B 1a und 50 Gew.-% des blockierten Präpolymeren gemäß Beispiel A 1 wurden mit der äquivalenten Menge des Bis-Ketimins gemäß Beispiel B 1 b homogenisiert und auf Betonplatten appliziert. Nach 24stündiger RT-Härtung war die Oberfläche klebfrei und nach 7d war die Beschichtung ausgehärtet.

### Beispiel 3

50 Gew.-% des blockierten Präpolymeren gemäß Beispiel B 1a und 50 Gew.-% des blockierten Präpolymeren gemäß Beispiel A 5 wurden mit der äquivalenten Menge des Bis-Ketimins gemäß Beispiel B 1b homogenisiert und auf Betonplatten appliziert. Nach 24stündiger RT-Härtung war die Oberfläche klebfrei und nach 7d war die Beschichtung ausgehärtet.

### Beispiel 4

a) 731 Gew.-T. IPDI-Uretdion wurden in 800 Gew.-T. MESAMOLL^{(R)} gelöst und anschießend mit 469 Gew.-T. TAA entsprechend Beispiel 1 umgesetzt. Das Reaktionsprodukt hatte eine Viskosität bei 25 °C von 18 000 mPa·s und einen freien NCO-Gehalt von 0,3 Gew.-%.
b) 50 Gew.-% des blockierten IPDI-Uretdions gemäß Beispiel 4a und 50 Gew.-% des blockierten Präpolymeren gemäß Beispiel A 2 wurden mit der äquivalenten Menge Bis-Ketimin gemäß Beispiel B 1b homogenisiert und auf Betonplatten appliziert. Nach 24stündiger RT-Härtung war die Oberfläche klebfrei und nach 7d war die Beschichtung ausgehärtet.

### Beispiel 5

50 Gew.-% des blockierten IPDI-Uretdions gemäß Beispiel B 4a und 50 Gew.-% des blockierten Präpolymeren gemäß Beispiel A 6 wurden mit der äquivalenten Menge Bis-Ketimin gemäß Beispiel B 1b homogenisiert und auf Betonplatten appliziert. Nach 24stündiger RT-Härtung war die Oberfläche klebfrei und nach 7d war die Beschichtung ausgehärtet.

### Beispiel 6

50 Gew.-% des blockierten IPDI-Uretdions gemäß Beispiel B 4a und 50 Gew.-% des blockierten Präpolymeren gemäß Beispiel A 6 wurden mit der äquivalenten Menge eines Bis-Ketimins, hergestellt aus TMD und MIBK, homogenisiert und auf Betonplatten appliziert. Nach 24stündiger RT-Härtung war die Oberfläche klebfrei und nach 7d war die Beschichtung ausgehärtet.

## Patentansprüche

1. Kalthärtende, lösemittelfreie, duroplastische Zwei- und Einkomponenten-Polyurethan-Polyharnstoff-Massen, bestehend aus
a) einem (cyclo)-aliphatischen Polyisocyanat, dessen freie NCO-Gruppen mit Piperidin-Derivaten folgender Formeln blockiert sind: 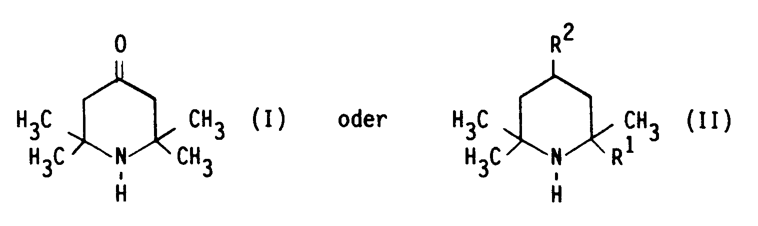 wobei
R¹ = H, CH₃
R² = H, OH, (-O)ₙ-R³, 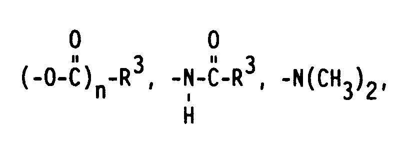 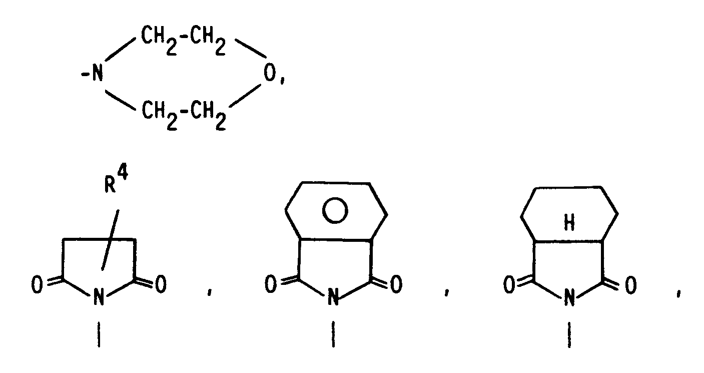
n = 1,2
R³ = C₁-C₁₈-Alkyl, wenn n = 1 und
R³ = C₂-C₁₈-Alkylen, wenn n = 2
R⁴ = H, C₁-C₂₀-Alkyl und
b) einem primären und/oder sekundären Di- und/oder Polyamin, wobei - im Fall der Einkomponenten-Systeme - die primären Aminogruppen in blockierter Form als Ketimine vorliegen und
c) Polyester- und/oder Polyetherpolyolen.

2. Massen nach Anspruch 1,
dadurch gekennzeichnet,
daß die blockierten (cyclo)-aliphatischen Polyisocyanate mit Polyolen kettenverlängert sind, wobei das OH/NCO-Verhältnis 1 : 1 bis 1,2 beträgt.

3. Massen nach Anspruch 1,
dadurch gekennzeichnet,
daß die blockierten (cyclo)-aliphatischen Polyisocyanate als Dimere oder Trimere vorliegen, gegebenenfalls im Gemisch mit den monomeren Polyisocyanaten.

4. Massen nach Anspruch 1,
dadurch gekennzeichnet,
daß das NCO/H-N -Verhältnis 0,8 bis 1,4 beträgt.

5. Massen nach Anspruch 1,
dadurch gekennzeichnet,
daß als Polyisocyanate Isophorondiisocyanat, 2,2,4(2,4,4)-Trimethylhexamethylendiisocyanat-1,6 und Hexamethylendiisocyanat-1,6 eingesetzt werden.

6. Massen nach Anspruch 1,
dadurch gekennzeichnet,
daß man aliphatische, cycloaliphatische oder aliphatische/cycloaliphatische Di- und/oder Polyamine einsetzt.

7. Massen nach den Ansprüchen 1 und 6,
dadurch gekennzeichnet,
daß Isophorondiamin, 2,2,4(2,4,4)-Trimethylhexamethylendiamin-1,6, 2-Methyl-pentamethylendiamin-1,5, Methylen-bis(n-cyclohexylamin), Diethylentriamin, Triethylentetramin, Tetraethylenpentamin und Pentaethylenhexamin eingesetzt werden.

8. Massen nach Anspruch 1.
dadurch gekennzeichnet,
daß das Isocyanat-/Aminogruppen-Verhältnis 1 : 1 beträgt.

9. Massen nach den Ansprüchen 1 bis 8,
dadurch gekennzeichnet,
daß sie in der PUR-Chemie übliche Füllstoffe, Pigmente, Katalysatoren und Viskositätsregler enthalten.

10. Verwendung der Massen nach den Ansprüchen 1 bis 9 als Beschichtungs-, Dichtungs- und Vergußmassen.

## Claims

1. Cold-curing, solvent-free thermosetting two- and one-component polyurethane polyurea compositions, consisting of
a) a (cyclo) aliphatic polyisocyanate, the free NCO groups of which are blocked with piperdine derivatives of the following formulae: 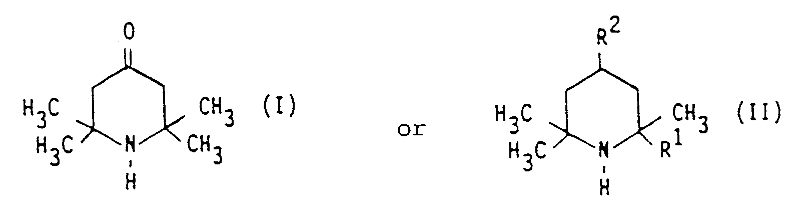 where
R¹ = H, CH₃
R² = H, OH, (-O)ₙ-R³, 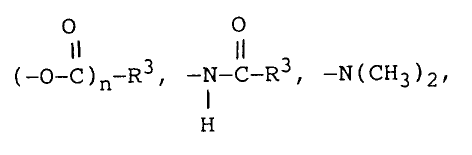 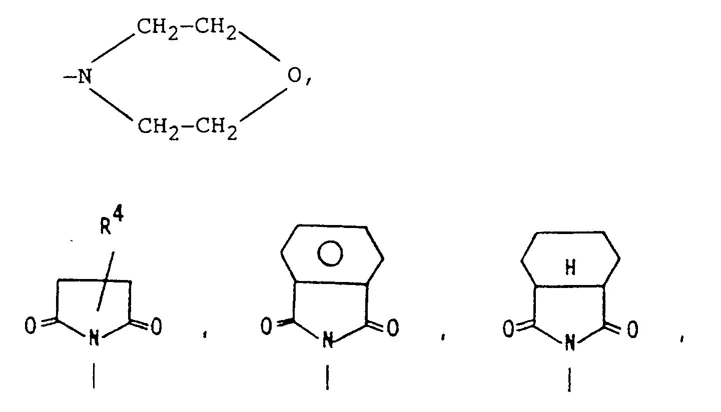
n = 1,2
R³= C₁-C₁₈ alkyl, when n=1 and
R³= C₂-C₁₈ alkylene, when n=2
R⁴ = H, C₁-C₂₀ alkyl and
b) a primary and/or secondary di- and/or polyamine, whereby - in the case of the one-component systems - the primary amino groups are present in blocked form as ketimines and
c) polyester and/or polyether polyols.

2. Compositions according to claim 1,
characterized in that
the blocked (cyclo)aliphatic polyisocyanates are chain-extended with polyols, whereby the OH/NCO ratio is 1 : 1 to 1.2.

3. Compositions according to claim 1,
characterized in that
the blocked (cyclo) aliphatic polyisocyanates are present as dimers or trimers, optionally in a mixture with the monomeric polyisocyanates.

4. Compositions according to claim 1,
characterized in that
the NCO/H-N ratio is 0.8 to 1.4.

5. Compositions according to claim 1,
characterized in that
isophorone diisocyanate, 2,2,4(2,4,4)-trimethyl hexamethylene diisocyanate-1,6 and hexamethylene diisocyanate-1,6 are used as polyisocyanates.

6. Compositions according to claim 1,
characterized in that
aliphatic, cycloaliphatic or aliphatic/cycloaliphatic di-and/or polyamines are used.

7. Compositions according to claims 1 and 6,
characterized in that
isophorone diamine, 2,2,4(2,4,4) trimethylhexamethylene diamine-1,6, 2-methyl-pentamethylene diamine-1,5, methylene-bis(n-cyclohexylamine), diethylene triamine, triethylene tetramine, tetraethylene pentamine and pentaethylene hexamine are used.

8. Compositions according to claim 1,
characterized in that
the isocyanate/amino groups ratio is 1 : 1.

9. Compositions according to claims 1 to 8,
characterized in that
they contain fillers, pigments, catalysts and viscosity regulators usual in PUR chemistry.

10. Use of the compositions according to claims 1 to 9 as coating, sealing and casting compositions.

## Revendications

1. Masses de polyurée-polyuréthanne à un et deux composants duroplastiques, dépourvues de solvant, durcissant à froid", qui sont formées de :.
a) un polyisocyanate (cyclo)aliphatique dont les groupes NCO libres sont bloqués avec des dérivés de pipéridine de formules suivantes 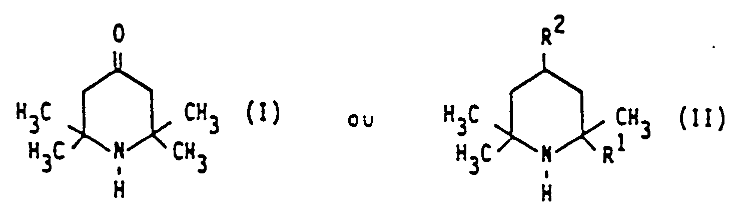 dans laquelle
R¹ = H, CH₃
R² = H, OH, (-O)ₙ-R³, 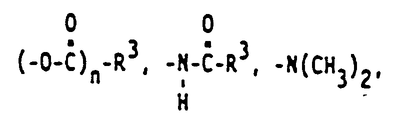 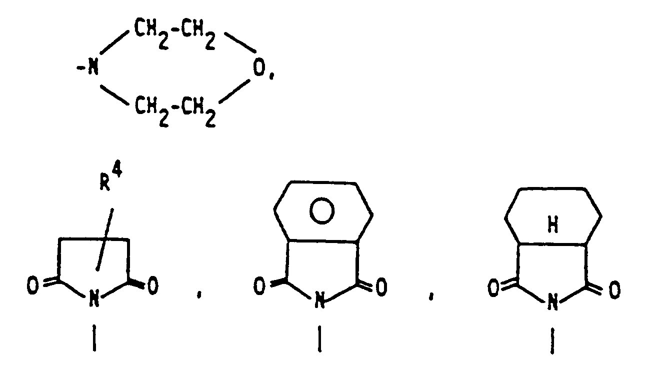
n = 1,2
R³ = C₁-C₁₈ alcoyle quand n = 1 et
R³ = C₂-C₁₈ alcoylène quand n = 2
R⁴ = H, C₁-C₂₀ alcoyle et
b) une di et/ou polyamine primaire et/ou secondaire dans laquelle dans le cas d'un système à un seul composant, les groupes aminé primaires se présentent sous forme bloquée, sous forme de cétimine et,
c) des éthers et/ou des esters de polyol.

2. Masses selon la revendication 1, caractérisées en ce que les polyisocyanates (cyclo)aliphatiques bloqués sont prolongés quant à la chaîne avec des polyols, pour lesquels le rapport OH/NCO s'élève à 1:1 à 1,2.

3. Masses selon la revendication 1, caractérisées en ce que les polyisocyanates(cyclo)aliphatiques bloqués se présentent en tant que dimères ou trimères, le cas échéant en mélange avec les polyisocyanates monomères.

4. Masses selon la revendication 1, caractérisées en ce que le rapport NCO/HN s'élève à 0,8 à 1,4.

5. Masses selon la revendication 1, caractérisées en ce que comme polyisocyanates on met en oeuvre l'isophorone diisocyanate, 2,2,4(2,4,4) triméthylhexaméthylène diisocyanate-1,6 et l'hexaméthylène diisocyanate-1,6.

6. Masses selon la revendication 1, caractérisées en ce que l'on met en oeuvre des di- et/ou polyamines aliphatiques, cycloaliphatiques ou aliphatiques/cyclo aliphatiques.

7. Masses selon les revendications 1 et 6, caractérisées en ce que l'on met en oeuvre l'isophoronediamine, la 2,2,4(2,4,4 triméthylhéxaméthylènediamine-1,6, la 2-méthylpentaméthylènediamine-1,5, la méthylène-bis-(n-cyclohexylamine), la diéthylènetriamine, la triéthylènetétramine, la tétraéthylènepentamine et la pentaéthylènehexamine.

8. Masses selon la revendication 1, caractérisées en ce que le rapport isocyanate/groupes amino s'élève à 1:1.

9. Masses selon les revendications 1 à 8, caractérisées en ce qu'elles contiennent des substances de charge usuelles dans la chimie des PUR, des pigments, des catalyseurs et des régulateurs de viscosité.

10. Utilisation des masses selon les revendications 1 à 9 en tant que masses de recouvrement, d'ètanchéité et de coulée.
